Europäisches Patentamt

European Patent Office

Office européen des brevets

(11) Publication number: 0 398 109
A2

## EUROPEAN PATENT APPLICATION

(21) Application number: 90108519.1

(51) Int. Cl.5: B64C 11/00, F02K 7/00

(22) Date of filing: 07.05.90

(30) Priority: 13.05.89 DE 3915725

(43) Date of publication of application:
22.11.90 Bulletin 90/47

(84) Designated Contracting States:
DE ES FR GB IT

(71) Applicant: DORNIER LUFTFAHRT GMBH
Postfach 3
D-8031 Wessling/Oberpfaffenhofen(DE)

(72) Inventor: Oberdörffer, Elmar, Dipl.-Ing.
Echbeck 16
D-7799 Heiliegenberg(DE)
Inventor: Zimmer, Herbert, Dr.
Virchowstrasse 21
D-7990 Friedrichshafen(DE)

(74) Representative: Landsmann, Ralf, Dipl.-Ing.
DORNIER GMBH - Patentabteilung - Kleeweg
3
D-7990 Friedrichshafen 1(DE)

(54) Propulsion unit for aircrafts flying at very high altitude.

(57) Antrieb für in extrem grossen Höhen mit Unterschallgeschwindigkeit fliegende Flugzeuge, mittels sich relativ zum Umgebungsluft mit hoher Überschallgeschwindigkeit bewegender Staustrahltriebwerke, wobei zur Geschwindigkeitsanpassung zwischen dem Staustrahlantrieb (4, 4') und dem Flugzeug (1) ein Propeller (2) zwischengeschaltet ist, an dessen Blattspitzen die Staustrahltriebwerke (4, 4') angebracht sind.

Fig.1

EP 0 398 109 A2

## Antrieb für in extrem grossen Höhen fliegende Flugzeuge

Die Erfindung betrifft Flugzeuge gemäß den Merkmalen des Oberbegriffs des Anspruches 1.

Gemäß dem Stand der Technik ist eine grosse Flugdauer allgemein nur bei Unterschallfluggeschwindigkeit möglich.

Für Flugzeuge, die in grossen Höhen fliegen und eine grosse Flugdauer erreichen sollen, sind Antriebe spezieller Höhenausführung, im übrigen aber konventioneller Bauart bekannt. Als Basistriebwerke werden PTL-, ZTL- und TL-Triebwerke verwendet. Maßnahmen zur Anpassung der genannten Art von Antrieben betreffen unter anderem das Kraftstofregelsystem, das Schmiersystem, die Fertigungstoleranzen in bezug auf die Ausbildung des verdichters und der Turbine, sowie den Betrieb mit höheren Verbrennungstemperaturen.

Sollen grössere Flughöhen als 24 km stationär erflogen werden, so kommen dafür beim heutigen Stand der Technik nur Überschall- oder Hyperschallflugzeuge in betracht. Diese Flugzeuge können jedoch wegen der für diese Geschwindigkeiten erforderlichen sehr hohen Antriebsleistung nur kurze Flug zeiten erreichen, in denen sie allerdings sehr grosse Strecken zurücklegen. Der wesentliche physikalische Grund, warum diese Flugzeuge grössere Flughöhen erreichen können als Unterschallflugzeuge, ist darin zu sehen, daß sie infolge der hohen Geschwindigkeit auch mit einem Lufteinlauf bescheidener Grösse imstande sind, trotz der geringen Luftdichte eine für die Erzeugung der erforderlichen Antriebsleistung ausreichende Luftmenge einzufangen und bereits im Lufteinlauf auf einen für die Verbrennung des Kraftstoffs ausreichenden Druck zu verdichten.

Nachteilig ist der Einsatz mit Schallgeschwindigkeit oder Hyperschallgeschwindigkeit fliegender Flugzeuge dann, wenn Flugmissionen zu erfüllen sind, die einen Aufenthalt des Flugzeuges für eine längere Zeitspanne innerhalb eines relativ eng begrenzten Luftraumes mit relativ geringer Fluggeschwindigkeit, das heisst mit einer Geschwindigkeit deutlich unterhalb der Schallgeschwindigkeit, zum Beispiel zur Erfüllung von Überwachungs-, Beobachtungs- oder Aufklärungsaufgaben erfordern.

Sollen gleichzeitig grosse Flughöhen beispielsweise bis 24 km erreicht beziehungsweise eingehalten werden, ist die Forderung, eine relativ geringe Fluggeschwindigkeit einzuhalten, nicht erfüllbar.

Betreffend die Verwendung von Staustrahltriebwerken ist bekannt, diese an den Blättern von Rotoren für Drehflügelflugzeuge, im Bereich der Blattspitzen anzuordnen.

Die Staustrahltriebwerke arbeiten dabei im Unterschallgeschwindigkeitsbereich. Der Grund für die Verwendung von Staustrahltriebwerken bei den genannten Fluggeräten besteht unter anderem in der einfachen Bauweise solcher Antriebe.

Vorteile ergeben sich auch im Hinblick auf ein wesentlich geringeres Gewicht gegenüber allgemein ausgebildeten Antrieben durch Wegfall des schweren Antriebsmotors und des zugehörigen Getriebes, sowie durch die günstige Drehmomentkompensation (DE-OS 24 59 438).

Ausserdem ist auch der Einsatz von Staustrahltriebwerken an Antrieben bekannt, die mit Propellern arbeiten (DE-PS 962 855).

Aufgabe der Erfindung ist die Schaffung eines Flugzeugantriebes, der einerseits geeignet ist in grösseren Höhen zu arbeiten und der andererseits einem Flugzeug erlaubt, sich über einen längeren Zeitraum innerhalb eines begrenzten Luftraumes mit relativ niedriger Fluggeschwindigkeit, zum Beispiel zu Beobachtungszwecken, aufzuhalten.

Die Lösung der gestellten Aufgabe ist durch die kennzeichnenden Merkmale des Anspruchs 1 und in vorteilhafter Ausgestaltung der Erfindung gemäß den Merkmalen weiterer, dem Anspruch 1 folgender Ansprüche gelöst.

Eine erfindungsgemäß ausgebildeter, mit einem Propeller arbeitender Antrieb, an dessen Blattspitzen mit hoher Überschallgeschwindigkeit umlaufende Staustrahltriebwerke angeordnet sind, ist in besonderer Weise geeignet für in extrem grosser Höhe mit Unterschallgeschwindigkeit operierende Flugzeuge.Der Einsatz von Staustrahltriebwerken für den Antrieb resultiert aus dem besonders einfachen Triebwerksaufbau und im Hinblick darauf, dass derartige Triebwerke keine rotierenden Teile aufweisen und damit infolge der im Betrieb auftretenden Fliehkräfte eine unzulässig hohe Beanspruchung der Triebwerksteile vermieden ist.

Demgegenüber arbeiten bekannte Staustrahltriebwerke einsetzende Antriebe im Unterschallgeschwindigkeitsbereich und weisen durchweg bewegliche Bauelemente, zum Beispiel für Steuerungszwecke, auf.

Bei der Ausführung der Staustrahltriebwerke ohne bewegliche Teile ist davon ausgegangen, dass sich bei einem derartigen Triebwerk mit Unterschallverbrennung die Düsenhalsfläche zur Einlaufhalsfläche bis auf einen konstanten Korrekturfaktor zur Berücksichtigung von Druckverlusten in der Brennkammer und von unterschiedlichen Halsmachzahlen, wie die Wurzel aus dem Verhältnis der Gesamttemperaturen vor und nach der Verbrennung verhalten. Infolge der festen Halsquerschnitte in Einlauf und Düse wird dabei das Verhältnis der Gesamttemperaturen vor und nach der Verbrennung auf einen festen Wert eingeregelt. Für die Leistungsregelung ist vorgesehen, dass diese über die Machzahl mit der die Staustrahltriebwerke arbeiten, bewirkt wird. Dazu sind die Propellerblätter in bezug auf ihre Steigung verstellbar vorgesehen. Im Gleichgewichtszustand ist die Propellerblattsteigung so eingestellt, dass die von den Staustrahltriebwerken erzeugte mechanische Leistung von den Propellerblättern gerade absorbiert und in eine entsprechende Beschleunigung des den Propeller durchströmenden Luftstromes umgesetzt wird.

Bei Vergrösserung der Steigung der Propellerblätter nimmt der Propeller mehr Leistung auf, als die Triebwerke erzeugen, und die Drehzahl nimmt ab. Damit nimmt auch die Machzahl ab mit der die Triebwerke arbeiten und parallel dazu der Luftdurchsatz, das Druckverhältnis, der Wirkungsgrad und die Gesamttemperatur der Anströmung. Auch bei konstant gehaltenem Verhältnis der Temperaturen vor und nach der Verbrennung nimmt der erforderliche Brennstoffdurchsatz ab.

Durch die kombinierte Wirkung der Einflüsse von Drehzahl, Durchsatz und Wirkungsgrad, sowie der Gesamttemperatur wird mit einer relativ geringen Drehzahländerung eine relativ grosse Leistungsänderung erreicht.

Nach Einregelung der gewünschten Drehzahl oder Leistung ist die Propellerblattsteigung so eingestellt, dass wieder Leistungsgleichgewicht zwischen Propeller und Staustrahltriebwerk besteht. Zur erneuten Erhöhung der Leistung wird die Steigung der Propellerblätter vorübergehend verkleinert, so dass ein Leistungsüberschuß zur Beschleunigung auf eine höhere Drehzahl entsteht.

Zur Erzielung günstiger Triebwerkswirkungsgrade im vorgesehenen Machzahlbereich ist der Lufteinlauf der Triebwerke als Mehrstoßdiffusor ausgelegt. Dabei ist für den genannten Anwendungsbereich eine Ausführung mit externer Kompression vorgesehen.

Bei dieser Ausführung ist berücksichtigt, dass nur ein Lufteinlauf mit externer Kompression bei fest eingestelltem Halsquerschnitt selbststartend ist, und dass sich Lufteinläufe mit externer Kompression selbsttätig an geringfügig geändert Luftdurchsätze infolge geringer Fehlregelung des Temperaturverhältnisses anpassen. Die Anpassung erfolgt indem der abschliessende senkrechte Verdichtungsstoß geringfügig vor- oder zurückwandert und so eine mehr oder weniger große Luftmenge das Überfliessen über die Einlauflippe nach Aussen erlaubt.

Vorgesehen ist als Kraftstoff vorzugsweise flüssiger Wasserstoff, der neben seinem sehr hohen Heizwert vorallem den Vorzug der Zündfähigkeit in einem weiten Mischungsbereich besitzt und sehr schnell verbrennt. Die Ausbildung der Triebwerke, insbesondere der Brennkammer, ist ohne Zuhilfenahme von Flammenhaltern im Hinblick auf die sehr hohen Fliehkräfte ausgeführt.

Zur Erzielung eines hohen Wirkungsgrades ist vorgesehen, dass die Düse als Konvergent/Divergent-Düse ausgelegt ist. Sie wird vorzugsweise als halbseitige Düse mit Prandtl-Meyer-Expansion, fokussiert an der kurzen Düsenlippe ausgebildet.

Da die Staustrahltriebwerke nicht in eine Zellenstruktur integriert sind, sondern frei im Luftstrom liegen, ist vorgesehen, die Brennkammerwand direkt von der äusseren Luftströmung und durch Wärmeabstrahlung zu kühlen.

Ein "Liner" ist daher entbehrlich.

Zum Anlassen der Triebwerke ist vorgesehen, den Propeller durch "Windmilling" auf eine für das Zünden der Staustrahltriebwerke ausreichende Drehzahl zu beschleunigen. Dazu wird das Flugzeug zunächst mit einem Hilfstriebwerk oder im Flugzeugschlepp gestartet und auf eine ausreichende Flughöhe gebracht.

In dieser Phase befinden sich die Propellerblätter in Segelstellung. Zum Starten der Staustrahltriebwerke wird die Steigung der Propellerblätter allmählich verkleinert, so dass das Triebwerk durch den Fahrtwind angetrieben und beschleunigt wird.

Es ist ferner vorgesehen, an der Nabe des Propellers mechanische Leistung zum Antrieb von Generatoren oder Hydraulikpumpen abzunehmen. Dafür ist nur eine Verringerung der Propellerblattsteigung erforderlich, so dass das Leistungsgleichgewicht erhalten bleibt.

Durch die besondere Ausbildung der Propellerblätter, insbesondere des mit hoher Überschallgeschwindigkeit umlaufenden Blattspitzenbereichs, wird eine strukturelle Ausbildung der Blätter ermöglicht, die geeignet ist, die auftre tenden Belastungen, hervorgerufen, insbesondere durch die an den Blattspitzen angeordneten Triebwerke, aufzunehmen. Dazu trägt bei, daß die Ausbildung eine Halbierung der örtlichen relativen Profildicke ermöglicht, sodaß im gesamten Blattaußenbereich des Propellerblattes die Profildicke unter 5 % liegt.

In der Zeichnung ist ein Ausführungsbeispiel des erfindungsgemäßen Antriebes dargestellt und in der nachfolgenden Beschreibung näher erläutert.

Es zeigt:

Fig. 1 eine Gesamtansicht des Antriebes, enthaltend den Propeller und an den Propellerblattspitzen angeordnete Staustrahltriebwerke, schematisiert in Perspektive dargestellt,

Fig. 2 einen Längsschnitt durch eine Ausführung eines Staustrahltriebwerkes,

Fig. 3 in einem Diagramm die örtliche Machzahl-Verteilung und die örtliche helikale Anströmmachzahl an einem Propellerblatt,

Fig. 4 den abgewickelten Grundriss eines Propellerblattes mit der Propellernabe schematisiert dargestellt und

Fig. 4a in einem Diagramm den Verlauf der Kurve aus dem Verhältnis der örtlichen relativen Profildicke zur Profiltiefe gemäß einem Propellerblatt nach Fig. 4.

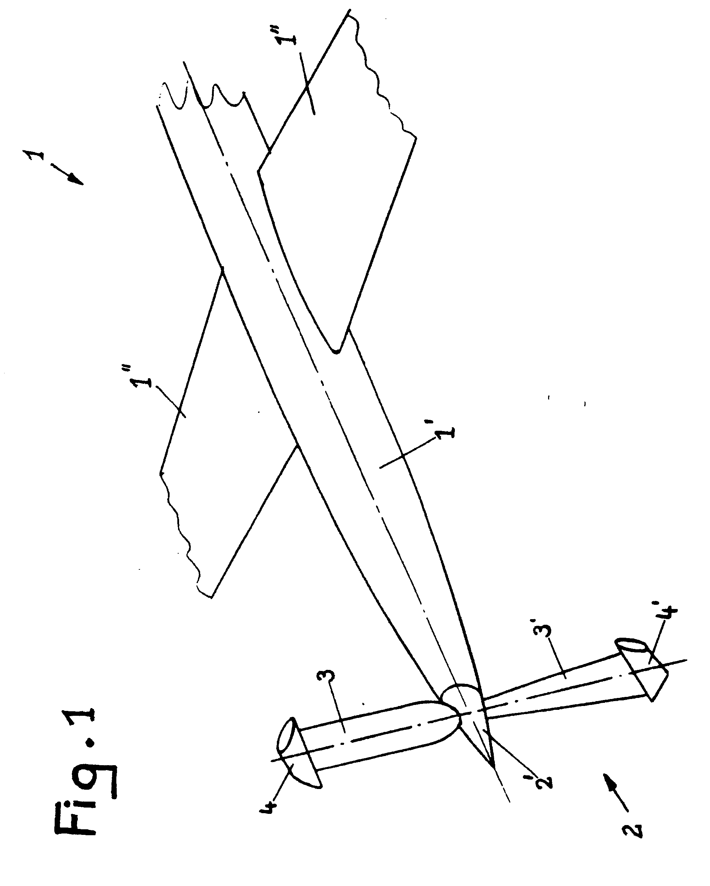

In Fig. 1 ist das anzutreibende Flugzeug mit 1 und der im Nasenbereich des Rumpes 1' angeordnete Propeller mit 2 und dessen Propellernabe mit 2' bezeichnet. Die zugehörige Verstelleinrichtung für die Änderung der Steigung der Propellerblätter 3, 3' ist hierbei im Hinblick auf die allgemein bekannte Ausbildung derartiger Verstellgetriebe der Vereinfachung halber nicht dargestellt. Im Bereich der Propellerblattspitzen sind die Staustrahltriebwerke 4, 4' angeordnet. Die Tragflügel des Flugzeuges 1 tragen die Bezugsziffer 1".

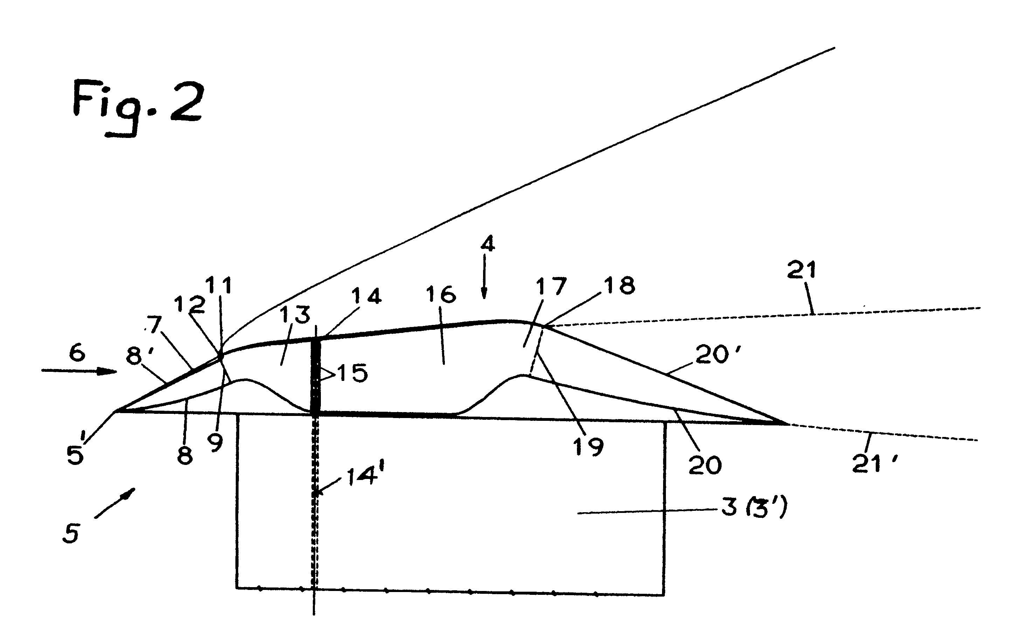

In Fig. 2 ist bei der beispielsweisen Ausbildung eines Staustrahltriebwerks die keilförmige Schneide des Lufteinlaufs 5 mit 5' bezeichnet, wobei mittels der Schneide 5' in Richtung des Pfeiles 6 die mit Überschallgeschwindigkeit strömende Luft die Ausbildung eines schrägen Verdichtungsstoßes 7 bewirkt, durch den Druck und Temperatur ansteigt. Eine weitere Verdichtung der auch hinter dem Stoß 7 noch mit Überschallgeschwindigkeit strömenden Luft wird bewirkt durch die konkav ausgebildete Rampe 8, deren Krümmung kontinuierlichen Verlauf aufweist, die aber auch diskontinuierlich, mit Knicken ausgeführt sein kann.

Die kontinuierliche Krümmung der Rampe bewirkt eine isentrope Verdichtung der Luft, während die Verdichtung an einer geknickt verlaufenden Rampe durch die von den Knicken ausgehenden Verdichtungsstößen hervorgerufen wird und Stoßverluste erleidet. Die Verzögerung der Strömung auf Unterschallgeschwindigkeit erfolgt in beiden Fällen durch einen abschliessenden, senkrechten Verdichtungsstoß 9.

Dieser Stoß befindet sich im Auslegungsfall eine geringe Strecke 12 vor der Einlauflippe 11, so dass ein geringer Teil der durch das Stoß-System verdichteten Luft die Einlauflippe 11 nach aussen umströmen kann. In einem gewissen Bereich passt sich die Lage des Stoßes automatisch der von der Brennkammer durchgelassenen Luftmenge an. Die Verhältnisse sind dabei so, daß bei Verringerung der durchgelassenen Luftmenge sich der Abstand zwischen dem Stoß 9 und der Einlauflippe 11 so vergrössert, dass mehr Luft an der Einlauflippe 11 vorbei nach aussen strömen kann. Bei Vergrösserung der durchgelassenen Luftmenge verkleinert sich der Abstand und es wird weniger Luft am Triebwerk vorbeigeleitet.

Die Rampe 8 ist mit seitlichen Begrenzungen 8' versehen, die ein seitliches Entweichen der durch die Rampe verdichteten Luft verhindert.

Der von der Einlauflippe 11 ins Innere des Triebwerks geleitete Anteil des Luftstromes fließt dann durch den geschlossenen, sich erweiternden Unterschalldiffusor 13, in dem die Geschwindigkeit der Luft weiter herabgesetzt und Druck und Temperatur weiter erhöht werden. Durch ein mit Durchlässen 15 versehenes Rohrteil 14 wird über das Zuführungsrohr 14' dem Luftstrom der Brennstoff in Form von Wasserstoffgas zugemischt.

Die Verbrennung findet bei nahezu konstantem Druck in der sich in Strömungsrichtung erweiternden Brennkammer 16 statt. Das heiße Brenngas wird anschliessend in dem sich verengenden Teil der Düse 17 bis auf Schallgeschwindigkeit beschleunigt, die das Brenngas im engsten Querschnitt 19 der Düse 17 erreicht. An dieser Stelle ist jedoch der Druck des Brenngases noch sehr viel höher, als der Umgebungsdruck, so dass eine weitere Beschleunigung auf Überschallgeschwindigkeit möglich ist.

Zu diesem Zweck ist eine einseitige Rampe 20 mit seitlichen Begrenzungen 20' vorgesehen, die so gekrümmt ist, dass sich eine an der Düsenlippe 18 zentrierte Prandtl-Meyer-Expansion ergibt. Im Auslegungsfall wird durch die Expansion annähernd der Umgebungsdruck erreicht und die Strahlgrenzen 21, 21' verlaufen nahezu parallel zur Richtung der Anströmung gemäß dem Pfeil 6.

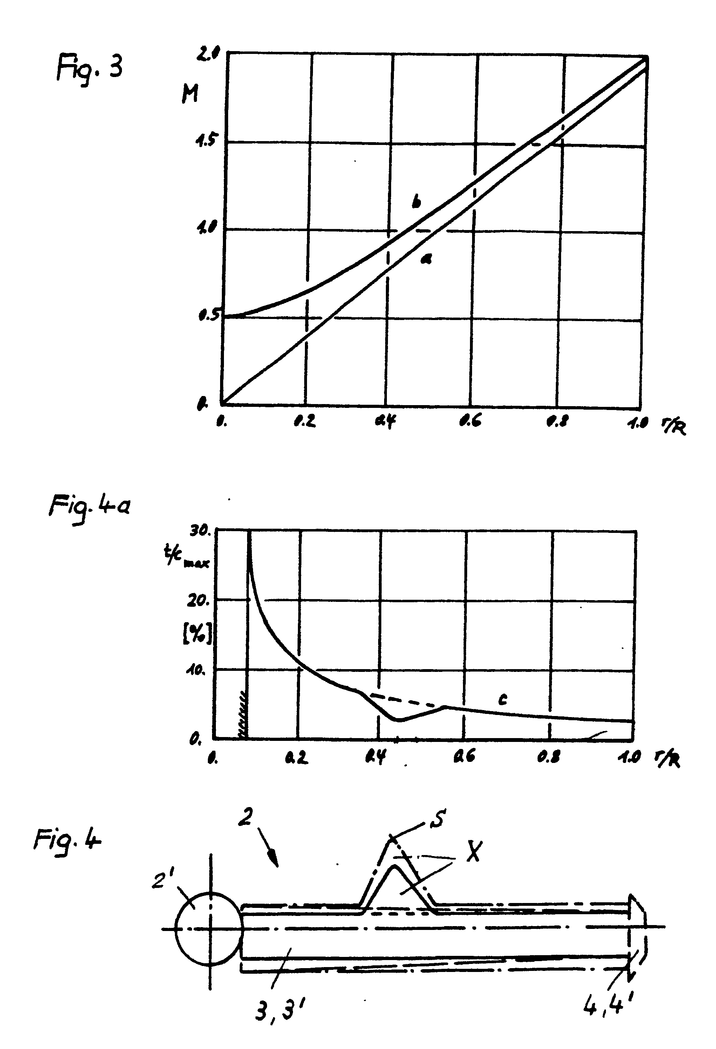

Die Fig. 3, 4, 4a beziehen sich auf eine Ausführungsform des Propellers 2 bzw. der Propellerblätter 3, 3' für den Einsatz in Verbindung mit der Flugzeug antriebsanlage, wie in den Fig. 1 und 2 dargestellt, und vorangehend beschrieben.

Die Propellerblätter 3, 3' sind im Hinblick auf die genannte Operationshöhe des Flugzeuges, den Betrieb im Überschallgeschwindigkeitsbereich der Propellerblattspitzen und den Antrieb des Propellers ausgeführt.

Als wesentliche Auslegungsmerkmale liegen der Ausbildung des Überschallpropellerblattes die Auslegungsbedingungen: Flugmachzahl $M = 0,5$ für die Flughöhe $H = 30$ km mit einer helikalen Blattspitzenmachzahl $M_H = 2,0$ zugrunde.

Dabei beträgt die Machzahl M aus der Umfangsgeschwindigkeit an der Propellerblattspitze $M_U = 1,94$.

Nach dem Diagramm Fig. 3 ist die Verteilung der örtlichen Machzahl aus der Umfangsgeschwindigkeit durch die Gerade a längs des Propellerradius R und die örtliche helikale Anströmmachzahl $M_H$ längs des Propellerradius R durch die Kurve b beschrieben.

Beim gezeigten Ausführungsbeispiel gemäß Fig. 4 sind drei mögliche Ausbildungen des Propellerblattes 3, 3', und zwar mit einer konstanten Blattiefe c (ununterbrochene Umrißlinie) mit einem Wert zwischen 10 % und 15 % des Radius R, oder mit einfacher Trapezform zwischen 15 % des Radius R an der Blattspitzen-Tiefe (gestrichelte Blattumrißlinie), sowie mit einer weiteren, in der Blattiefe c unterschiedlichen Ausbildung (strichpunktierte Linien) angegeben.

Die örtliche maximale Profildicke t des Propellerblattes 3, 3' variiert beim gezeigten Ausführungsbeispiel zwischen etwa 30 % an der Propellerblattwurzel und etwa 3 % an der Blattspitze gemäß der Kurve c des Diagramms nach Fig. 4a.

Um in dem kritischen transsonischen Bereich $M_H$ = 0,85 bis 1,15, welcher bei den beschriebenen Auslegungsbedingungen zwischen etwa 35 % und 55 % Radius R liegt, eine Verminderung des Wellenwiderstandes zu erreichen, weist das Propellerblatt 3, 3' eine etwa dreieckförmige, gegen die Anströmung weisende Grundriß- Erweiterung X auf.

Diese Grundrißerweiterung ist so bemessen, daß an deren Spitze S bei 45 % Radius R mit der örtlichen helikalen Machzahl M = 1,0 die Propellerblattiefe c etwa verdoppelt ist.

Damit wird nach der Kurve c in Fig. 4a eine Halbierung der örtlichen relativen Profildicke t erreicht. Daraus resultiert, daß im gesamten, im Überschallgeschwindigkeitsbereich arbeitenden, äußeren Propellerabschnitt, die örtliche Profildicke t unterhalb von 5 % liegt.

Ferner wird durch die beschriebene Ausbildung erreicht, daß die tragende Struktur des Propellerblattes mit ihrem in Richtung des Radius R verlaufenden Holm durch die erforderliche Blattprofilierung und ebenso durch die Treibstoffzuführung 14' im Holm zum Triebwerk 4, 4' nicht beeinträchtigt.

## Claims

1. Propellergetriebenes Flugzeug für Fluggeschwindigkeiten im Unterschallbereich mit Staustrahltriebwerken an den Propellerblattenden bzw. im Bereich der Enden, **dadurch gekennzeichnet, daß**
- die Staustrahltriebwerke (4, 4') für Umfangsgeschwindigkeiten größer Mach 1 ausgelegt sind und
- daß das Flugzeug (1) bzw. dessen Antrieb (4, 4'; 2) für den Betrieb in extrem großen Höhen ausgebildet ist.

2. Flugzeug nach Anspruch 1, **dadurch gekennzeichnet, daß** der Triebwerkslufteinlauf (5) und die Strahldüse (17) des Staustrahltriebwerks (4, 4') feste Querschnitte aufweist und daß die Gesamttemperaturen der Strömung vor und nach der Verbrennung in der Brennkammer (16) durch Anpassung der Brennstoffmenge in einem festen Verhältnis zueinander eingeregelt werden.

3. Flugzeug nach mindestens einem der vorangehenden Ansprüche, **dadurch gekennzeichnet, daß** das Propellerblatt (3, 3') in bezug auf seinen Grundriß auf einem begrenzten Bereich des Blattradius (R) eine in die Anströmung weisende Grundrißerweiterung (X) besitzt.

4. Flugzeug nach mindestens einem der vorangehenden Ansprüche, **dadurch gekennzeichnet, daß** die Grundrißerweiterung (X) Dreiecksform mit gegen die Anströmung weisender Spitze (S) aufweist.

5. Flugzeug nach mindestens einem der vorangehenden Ansprüche, **dadurch gekennzeichnet, daß** die Grundrißerweiterung (X) mit ihrer Spitze (S) bei etwa 45 % Radius (R) des Propellerblattes (3, 3') gebildet ist.

6. Flugzeug nach mindestens einem der vorangehenden Ansprüche, **dadurch gekennzeichnet, daß** mit der Grundrißerweiterung (X) an der Spitze (S) bei 45 % Radius (R) mit der örtlichen helikalen Machzahl von etwa $M_H$ = 1,0 die Propellerblatt-Tiefe (c) etwa verdoppelt ist.

7. Flugzeug nach mindestens einem der vorangehenden Ansprüche, **dadurch gekennzeichnet, daß** die Propellerblätter (3, 3') des Propellers (2) in an sich bekannter Weise zur Leistungsregelung in bezug auf die Blattsteigung einstellbar sind.

8. Flugzeug nach mindestens einem der vorangehenden Ansprüche, **dadurch gekennzeichnet, daß** der Lufteinlauf (5) der Staustrahltriebwerke (4, 4') als Mehrstoßeinlauf an sich bekannter Bauart mit externer Verdichtung zur Erzielung einer automatischen Anpassung des Luftdurchsatzes an den Bedarf der Brennkammer (16) des Triebwerks (4, 4') ausgebildet ist.

9. Flugzeug nach mindestens einem der vorangehenden Ansprüche, **dadurch gekennzeichnet, daß** die Strahlaustrittsdüse (17) des Triebwerks (4, 4') mit einer einseitigen Strahlführung und einer Strahlexpansion nach Prandtl-Meyer arbeitet.

10. Flugzeug nach mindestens einem der vorangehenden Ansprüche, **dadurch gekennzeichnet, daß** die Kühlung der Brennkammer (16) der Staustrahltriebwerke (4, 4') mittels der das Triebwerk (4, 4') umgebenenden Aussenströmung bewirkt wird.

11. Flugzeug nach mindestens einem der vorangehenden Ansprüche, **dadurch gekennzeichnet, daß** die Leistungsabnahme für Hilfsantriebe an der Nabe (2') des Propellers (2) vorgesehen ist.

12. Flugzeug nach mindestens einem der vorangehenden Ansprüche, **dadurch gekennzeichnet, daß** für das Anlassen der Staustrahltriebwerke (4, 4') die Propellerblätter (3, 3') in bezug auf ihre Steigung einstellbar ausgebildet sind.

13. Antrieb nach mindestens einem der vorangehenden Ansprüche, **dadurch gekennzeichnet, daß** als Brennstoff für das Triebwerk (4, 4') Wasserstoff verwendet wird und für die Brennstoffzuführung zum Triebwerk radial im Propellerblatt (4, 4') nach außen verlaufende Rohrleitung (14') vorgesehen ist, deren radiale Fortsetzung (14) in die Brennkammer (16) mit Durchläße (15) als Flammhalter hineinragt.

**Fig.1**

Fig. 2

Fig. 3

Fig. 4a

Fig. 4